# EUROPEAN PATENT APPLICATION

(11) **EP 1 783 443 A1**
(43) Date of publication of application: **09.05.2007**
(21) Application number: 05768934.1
(22) Date of filing: 04.08.2005
(51) Int. Cl.: F25B 25/02, F25B 41/06

(54) **FREEZING APPARATUS**

(30) Priority: 06.08.2004 JP 2004230604
(71) Applicant: DAIKIN INDUSTRIES, LTD., Osaka-shi, Osaka 530-8323 (JP)
(72) Inventor: Takegami, Masaaki, c/o Kanaoka Factory, Sakai-shi, Osaka 5918511 (JP); Tanimoto, Kenji, c/o Kanaoka Factory, Sakai-shi, Osaka 5918511 (JP); Kondo, Azuma, c/o Kanaoka Factory, Sakai-shi, Osaka 5918511 (JP)
(74) Representative: HOFFMANN EITLE
(86) International application number: PCT/JP2005/014329
(87) International publication number: WO 2006/013938

(57) **Abstract**

In order that an indoor heat exchanger **(41),** a cold storage heat exchanger **(45),** and a freeze storage heat exchanger **(51)** may differ in their refrigerant evaporating temperature, a refrigerant circuit **(1E)** is provided with a suction side three way switching valve **(102)** capable of switching of flow paths between the heat exchangers **(41, 45, 51)** and a compressor **(2).**

## Description

### TECHNICAL FIELD

The present invention relates generally to a refrigerating apparatus, and more particularly, to a refrigerating apparatus including an air conditioning heat exchanger for room air conditioning and a refrigeration heat exchanger for storage compartment refrigeration.

### BACKGROUND ART

Refrigerating apparatuses which perform refrigeration cycles are well known in the conventional art. This type of refrigerating apparatus has been used widely as an air conditioner for providing room air conditioning (cooling and heating) or as a cooler for a refrigerator for storage of foods and the like. There is one such refrigerating apparatus capable of both air conditioning and cold storage. The refrigerating apparatus is equipped with a plurality of utilization side heat exchangers including an air conditioning heat exchanger and a refrigeration heat exchanger, and intended for installation in a convenience store or the like. As disclosed in JP Pat. No. 3253283 and JP, 2003-75022, A, just by installation of a single refrigerating apparatus of this type, both store air conditioning and showcase refrigeration can be provided.

The above-described conventional refrigerating apparatus is equipped with a plurality of compressors, and by creating a difference in evaporating pressure between a compressor which feeds refrigerant to the air conditioning heat exchanger and another compressor which feeds refrigerant to the refrigeration heat exchanger, the refrigerant in the air conditioning heat exchanger and the refrigerant in the refrigeration heat exchanger evaporate at different temperatures. In this way, it becomes possible to provide, by flow path switching, various operating modes (including an operating mode in which only air conditioning is provided, an operating mode in which only cold storage is provided, and an operating mode in which air conditioning and cold storage are provided in combination).

### PROBLEMS THAT THE INVENTION INTENDS TO SOLVE

If the above-described conventional refrigerating apparatus is provided, on the gas side of the air conditioning heat exchanger, with an evaporating pressure regulating valve, this allows the apparatus to accomplish switching of the operating modes by constantly holding the evaporating pressure in the air conditioning heat exchanger above a certain set value so that the refrigerant in the air conditioning heat exchanger and the refrigerant in the refrigeration heat exchanger have different evaporating temperatures, without the need to create a difference in evaporating pressure between the separate compressors. This therefore makes it possible to achieve simplification of the refrigerant circuit.

However, the separate provision of the evaporating pressure regulating valve on the gas side of the air conditioning heat exchanger produces problems, in other words the number of component parts increases; the cost of production increases; and the loss of pressure increases.

With these problems in mind, the present invention was devised. Accordingly, an object of the present invention is to provide efficient operating mode switching. To this end, the difference in evaporating pressure between an air conditioning heat exchanger and a refrigeration heat exchanger is made variable by the use of a simplified configuration.

### DISCLOSURE OF THE INVENTION

In the following, the present invention provides means for solving the problems.

More specifically, a first problem solving means of the invention provides a refrigerating apparatus comprising a refrigerant circuit **(1E),** and the refrigerant circuit **(1E)** includes a compressor **(2),** a heat source side heat exchanger **(4),** an expansion mechanism, a first heat exchanger **(41)** for room air conditioning, and a second heat exchanger **(45, 51)** for storage compartment refrigeration which are connected.

The refrigerant circuit **(1E)** is provided with a flow rate regulating means **(102)** for establishing switching of flow paths between the first heat exchanger **(41)** and the second heat exchanger **(45, 51),** and the compressor **(2)** in such a manner that the amount of refrigerant flow becomes variable, whereby the first heat exchanger **(41)** and the second heat exchanger **(45, 51)** differ from each other in refrigerant evaporating temperature.

In the first problem solving means, while the evaporating temperature of the first heat exchanger **(41)** is held higher than that of the second heat exchanger **(45, 51)** by the flow rate regulating means **(102),** flow path switching is established to thereby accomplish operating mode switching.

A second problem solving means of the invention provides a refrigerating apparatus comprising a refrigerant circuit **(1E),** and the refrigerant circuit **(1E)** includes a compressor **(2),** a heat source side heat exchanger **(4),** an expansion mechanism, a first heat exchanger **(41)** with a first evaporating temperature, and a second heat exchanger **(45, 51)** with a second evaporating temperature which are connected.

The refrigerant circuit **(1E),** in which the first heat exchanger **(41)** and the second heat exchanger **(45, 51)** are connected in parallel, is provided, on a suction side of the compressor **(2),** with a flow rate regulating means **(102)** for variably changing the amount of refrigerant flow from the first heat exchanger **(41)** and the second heat exchanger **(45, 51)** to the compressor **(2).**

In the second problem solving means, the flow rate regulating means **(102)** arranged on the suction side of the compressor **(2)** changes the amount of refrigerant flow so that the first heat exchanger **(41)** and the second heat exchanger **(45, 51)** which are connected in parallel differ from each other in refrigerant evaporating temperature, thereby accomplishing switching between operating modes.

A third problem solving means according to the first problem solving means or the second problem solving means is characterized in that the flow rate regulating means is a switching valve **(102)** capable of flow rate regulation and connected to a suction pipe **(6)** of the compressor **(2)** and to the first heat exchanger **(41)** and the second heat exchanger **(45, 51).**

In the refrigerating apparatus of the third problem solving means, the switching valve **(102)** operates to switch flow paths while maintaining the difference in evaporating temperature between the first heat exchanger **(41)** and the second heat exchanger **(45, 51),** thereby making it possible to perform each operating mode.

### EFFECTS

Therefore, in accordance with these problem solving means of the present invention, by means of the flow rate regulating means **(102),** flow path switching is accomplished while the evaporating temperature of the first heat exchanger **(41)** is held higher than the evaporating temperature of the second heat exchanger **(45, 51).** This arrangement therefore allows the refrigerating apparatus to accomplish efficient switching between operating modes, without having to create a difference in evaporating pressure by employing a plurality of compressors or to separately provide a pressure regulating valve.

### BRIEF DESCRIPTION OF THE DRAWINGS

Figure **1** is a circuit diagram which illustrates a refrigerant circuit of a refrigerating apparatus in accordance with an embodiment of the present invention;
Figure **2** is a refrigerant circuit diagram which depicts refrigerant flow during the cooling operating mode;
Figure **3** is a refrigerant circuit diagram which depicts refrigerant flow during the refrigeration operating mode;
Figure **4** is a refrigerant circuit diagram which depicts refrigerant flow during cooling/refrigeration operating mode;
Figure **5** is a Mollier chart which represents the behavior of refrigerant in the cooling/refrigeration operating mode;
Figure **6** is a refrigerant circuit diagram which depicts refrigerant flow during the heating operating mode;
Figure **7** is a refrigerant circuit diagram which depicts refrigerant flow during a first heating/refrigeration operating mode;
Figure **8** is a refrigerant circuit diagram which depicts refrigerant flow during a second heating/refrigeration operating mode;
Figure **9** is a refrigerant circuit diagram which depicts refrigerant flow during a third heating/refrigeration operating mode; and
Figure **10** is a Mollier chart which represents the behavior of refrigerant in the third heating/refrigeration operating mode.

### BEST MODE FOR CARRYING OUT THE INVENTION

Hereinafter, an embodiment of the present invention is described in detail by making reference to the drawing figures. The following embodiment is an essentially preferable example, it therefore being understood that the embodiment is not intended to limit the scope of the present invention and its applicability.

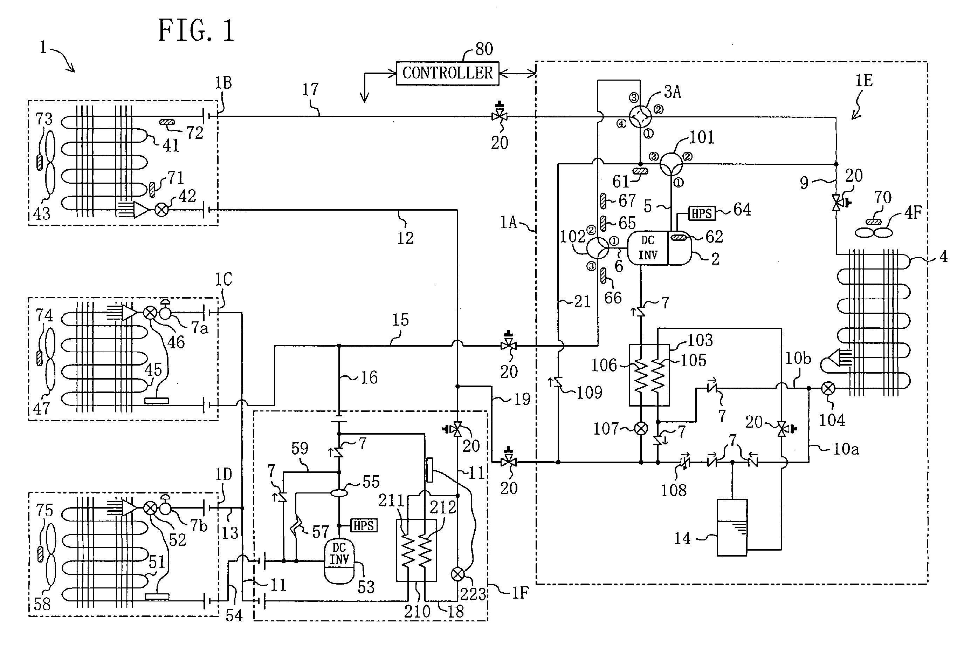

With reference to Figure **1,** there is shown a refrigerating apparatus **(1)** of the present embodiment which is generally installed in premises such as a convenience store, a super market, et cetera. The refrigerating apparatus **(1)** is employed to provide both refrigeration of showcases (not shown), i.e. storage compartment refrigeration, and room air cooling and heating.

The refrigerating apparatus **(1)** includes an outdoor unit **(1A),** an indoor unit **(1B),** a cold storage unit **(1C),** and a freeze storage unit **(1D),** and is equipped with a refrigerant circuit **(1E)** which effects a vapor compression refrigeration cycle. Additionally, the refrigerant circuit **(1E)** has a booster unit **(1F).** The indoor unit **(1B),** the cold storage unit **(1C),** and the freeze storage unit **(1D)** are connected in parallel. And the refrigerant circuit **(1E)** is configured, such that it is selectively switchable between a cooling cycle and a heating cycle.

The indoor unit **(1B)** is configured so as to be able to selectively perform a cooling operating mode or a heating operating mode. The indoor unit **(1B)** is installed for example on a store's selling floor or other area. The cold storage unit **(1C)** is installed in a cold storage showcase for cooling compartment air in the cold storage showcase. The freeze storage unit **(1D)** is installed in a freezer showcase for cooling compartment air in the freezing showcase.

### OUTDOOR UNIT

The outdoor unit **(1A)** includes an inverter compressor **(2),** a four way switching valve **(3A),** a discharge side three way switching valve **(101),** a suction side switching valve **(102)** serving as a flow rate regulating means, an outdoor heat exchanger **(4)** servings as a heat source side heat exchanger, and an economizer heat exchanger **(103).**

The inverter compressor **(2)** is made up of, for example, a hermetically closed type screw compressor. The inverter compressor **(2)** is configured, such that it is inverter controlled to gradually or continuously vary in volume. The inverter compressor **(2)** has a discharge pipe **(5)** in fluid communication with a first port of the discharge side three way switching valve **(101).** The operating volume of the inverter compressor **(2)** is controlled so that the refrigerant pressure on the indoor unit's **(1B)** side is always held constant. During the heat recovery operating mode in which an indoor heat exchanger **(41)** and an outdoor heat exchanger **(4)** (which are described later) each operate as a condenser, it is controlled such that the pressure in the indoor heat exchanger **(41)** is held constant. The inverter compressor **(2)** may be implemented by a scroll compressor.

A gas side end of the outdoor heat exchanger **(4)** (i.e. the end on the side of the inverter compressor **(2))** is connected, by an outdoor gas pipe **(9),** to the junction of a line extending from a second port of the discharge side three way switching valve **(101)** and a line extending from a second port of the four way switching valve **(3A).** A heating electronic expansion valve **(104)** is positioned at a liquid side end of the outdoor heat exchanger **(4),** and one end of a first liquid pipe **(10a)** which is a liquid line and one end of a second liquid pipe **(10b)** are connected in fluid communication with the heating electronic expansion valve **(104).** The heating electronic expansion valve **(104)** is employed to reduce refrigerant pressure during the heating operating mode in which the outdoor heat exchanger **(4)** operates as an evaporator. Its control is exercised based on a suction heating temperature of the inverter compressor **(2)** detected by a suction temperature sensor **(67)** (which is described later). The first liquid pipe **(10a)** is connected in fluid communication with an inlet opening of a receiver **(14).** A first flow path **(105)** of the economizer heat exchanger **(103)** is connected in fluid communication with the second liquid pipe **(10b).**

The outdoor heat exchanger **(4)** is, for example, a fin and tube heat exchanger of the cross fin type. An outdoor fan **(4F)** is positioned in close proximity to the outdoor heat exchanger **(4).**

The inverter compressor **(2)** has a suction pipe **(6)** connected in fluid communication with a first port of the suction side three way switching valve **(102).** A third port of the suction side three way switching valve **(102)** is connected in fluid communication by way of a closing valve **(20)** with a low pressure gas pipe **(15).**

A first port of the four way switching valve **(3A)** is connected in fluid communication with the junction of a line extending from a third port of the discharge side three way switching valve **(101)** and a communicating pipe **(21)** (described later). A line extending from a third port of the four way switching valve **(3A)** is connected in fluid communication with a second port of the suction side three way switching valve **(102).** An interconnecting gas pipe **(17)** is connected in fluid communication by way of a closing valve **(20)** with a line extending from a fourth port of the four way switching valve **(3A).**

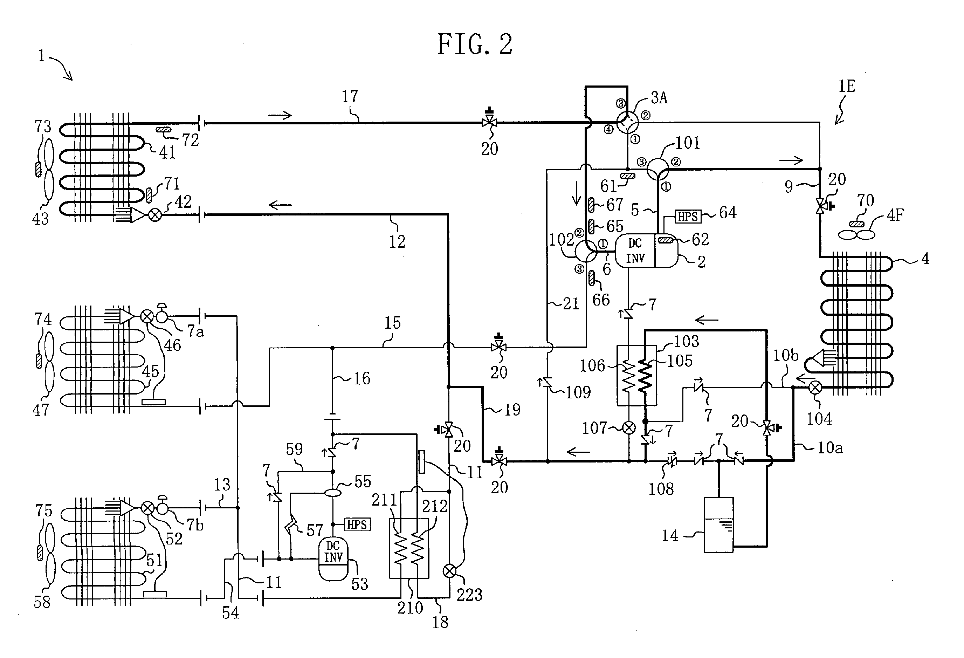

The four way switching valve **(3A)** is configured, such that it selectively changes state between an ON state (indicated by solid line of Figure **2**) and an OFF state (indicated by broken line of Figure **2**). The ON state allows fluid communication between the junction of the line extending from the third port of the discharge side three way switching valve **(101)** and the communicating pipe **(21),** and the interconnecting gas pipe **(17)** and, in addition, allows fluid communication between the junction of the outdoor gas pipe **(9)** and the line extending from the second port of the discharge side three way switching valve **(101),** and a line extending from the second port of the suction side three way switching valve **(102),** while on the other hand the OFF state allows fluid communication between the junction of the line extending from the third port of the discharge side three way switching valve **(101)** and the communicating pipe **(21),** and the outdoor gas pipe **(9)** and, in addition, allows fluid communication between the interconnecting gas pipe **(17)** and the line extending from the second port of the suction side three way switching valve **(102).**

The interconnecting gas pipe **(17),** the low pressure gas pipe **(15),** and the connecting liquid pipe **(19)** are arranged so as to extend outwardly from the outdoor unit **(1A),** and their respective closing valves **(20)** are located within the outdoor unit **(1A).**

The economizer heat exchanger **(103)** is provided with a first flow path **(105)** and a second flow path **(106).** A line extending from one end of the first flow path **(105)** is connected in fluid communication with the outlet opening of the receiver **(14).** The other end of the first flow path **(105)** is connected in fluid communication with the junction of the connecting liquid pipe **(19)** and a line extending from the inlet opening of the receiver **(14).** One end of the second flow path **(106)** is connected in fluid communication by way of a check valve **(7)** with an intermediate pressure part (not shown) of the inverter compressor **(2).** The other end of the second flow path **(106)** is connected in fluid communication by way of an economizer electronic expansion valve **(107)** with the junction of the line extending towards the connecting liquid pipe **(19)** from the inlet opening of the receiver **(14).** As a result of this configuration, liquid refrigerant exiting from the outlet opening of the receiver **(14)** once passes through the first flow path **(105)** of the economizer heat exchanger **(103).** Subsequently, the refrigerant is reduced in pressure in the economizer electronic expansion valve **(107).** Then, the refrigerant passes through the second flow path **(106),** during which the refrigerant, which is in a low pressure state, is supercooled by refrigerant in the first flow path **(105),** and is introduced into the intermediate pressure part of the inverter compressor **(2).** The economizer electronic expansion valve **(107)** is controlled in accordance with the supercooling degree and the temperature of refrigerant in the discharge pipe **(5)** of the inverter compressor **(2).** The check valve **(7)** is employed to prevent refrigerant back flow from the intermediate pressure part of the inverter compressor **(2).** By introduction of the supercooled, low pressure refrigerant into to the intermediate pressure part of the inverter compressor **(2),** the inverter compressor **(2)** is prevented from being overheated.

Check valves **(7)** are provided, respectively, on the side of the first liquid pipe **(10a)** and on the side of the first flow path **(105)** of the economizer heat exchanger **(103)** in the inlet opening of the receiver **(14),** whereby refrigerant flows only in the direction of the inlet opening of the receiver **(14).** In addition, a condensing pressure regulating valve **(108)** is located between the line extending from the inlet opening of the receiver **(14)** and the side of the first flow path **(105)** of the economizer heat exchanger **(103).** The condensing pressure regulating valve **(108)** is employed to prevent a refrigerant deficiency on the side of the indoor unit **(1B)** when outside temperature is low during the heating operating mode.

The communicating pipe **(21)** which is an auxiliary line is fluidly connected between the junction of the line extending from the first port of the four way switching valve **(3A)** and the line extending from the third port of the discharge side three way switching valve **(101),** and the line extending towards the receiver **(14)** from the connecting liquid pipe **(19).** The communicating pipe **(21)** is provided with a spring-loaded check valve **(109).** The spring-loaded check valve **(109)** is configured not to operate under normal conditions, but it is employed to prevent fluid leak from occurring when the receiver **(14)** is filled up with liquid refrigerant at shutdown or when each valve is placed in the closed state.

### INDOOR UNIT

The indoor unit **(1B)** includes, in addition to the indoor heat exchanger **(41)** which serves as a first heat exchanger, an indoor expansion valve **(42)** which is an expansion mechanism. The gas side of the indoor heat exchanger **(41)** is connected in fluid communication with the interconnecting gas pipe **(17).** On the other hand, the liquid side of the indoor heat exchanger **(41)** is connected in fluid communication by way of the indoor expansion valve **(42)** with a second interconnecting liquid pipe **(12).** The second interconnecting liquid pipe **(12)** is connected in fluid communication with the connecting liquid pipe **(19)** extending to the outdoor unit **(1A).** The indoor heat exchanger **(41)** is, for example, a fin and tube heat exchanger of the cross fin type. An indoor fan **(43)** is positioned in close proximity to the indoor heat exchanger **(41).**

### COLD STORAGE UNIT

The cold storage unit **(1C)** includes, in addition to the cold storage heat exchanger **(45)** which serves as a second heat exchanger, a cold storage expansion valve **(46)** which is an expansion mechanism. The liquid side of the cold storage heat exchanger **(45)** is connected in fluid communication by way of an electromagnetic valve **(7a)** and the cold storage expansion valve **(46)** with a first interconnecting liquid pipe **(11).** On the other hand, the gas side of the cold storage heat exchanger **(45)** is connected in fluid communication with the low pressure gas pipe **(15).**

The cold storage heat exchanger **(45)** is in fluid communication by way of the low pressure gas pipe **(15)** with the third port of the suction side three way switching valve **(102),** while during the cooling operating mode the indoor heat exchanger **(41)** is in fluid communication by way of the interconnecting gas pipe **(17)** with the second port of the suction side three way switching valve **(102).** By virtue of the flow rate regulation of the suction side three way switching valve **(102),** the refrigerant pressure (evaporating pressure) of the cold storage heat exchanger **(45)** falls below the refrigerant pressure (evaporating pressure) of the indoor heat exchanger **(41).** As a result of this, the refrigerant evaporating temperature of the cold storage heat exchanger **(45)** becomes, for example, minus 10 degrees Centigrade, while the refrigerant evaporating temperature of the indoor heat exchanger **(41)** becomes, for example, plus 5 degrees Centigrade, whereby the refrigerant circuit **(1E)** constitutes a circuit with different evaporation temperatures.

The cold storage expansion valve **(46)** is a temperature sensitive expansion valve and its temperature sensing tube is provided on the gas side of the cold storage heat exchanger **(45).** The cold storage heat exchanger **(45)** is, for example, a fin and tube heat exchanger of the cross fin type. A cold storage fan **(47)** is positioned in close proximity to the cold storage heat exchanger **(45).**

### FREEZE STORAGE UNIT

The freeze storage unit **(1D)** includes a freeze storage heat exchanger **(51)** which serves as a second heat exchanger, and a freeze storage expansion valve **(52)** which is an expansion mechanism. The liquid side of the freeze storage heat exchanger **(51)** is connected in fluid communication by way of an electromagnetic valve **(7b)** and the freeze storage expansion valve **(52)** with a branch liquid pipe **(13)** branched off from the first interconnecting liquid pipe **(11).**

The freeze storage expansion valve **(52)** is a temperature sensitive expansion valve and its temperature sensing tube is provided on the gas side of the freeze storage heat exchanger **(51).** The freeze storage heat exchanger **(51)** is, for example, a fin and tube heat exchanger of the cross fin type. A freeze storage fan **(58)** is positioned in close proximity to the freeze storage heat exchanger **(51).**

### BOOSTER UNIT

The booster unit **(1F)** includes a booster compressor **(53)** and a supercooling heat exchanger **(210).**

In order that the evaporating temperature of refrigerant in the freeze storage heat exchanger **(51)** may fall below the evaporating temperature of refrigerant in the cold storage heat exchanger **(45),** the booster compressor **(53)** two-stage compresses refrigerant along with the inverter compressor **(2).** The refrigerant evaporating temperature of the freeze storage heat exchanger **(51)** is set at minus 40 degrees Centigrade for example.

The gas side of the freeze storage heat exchanger **(51)** and the suction side of the booster compressor **(53)** are connected in fluid communication with each other by a connecting gas pipe **(54).** The discharge side of the booster compressor **(53)** is connected in fluid communication with a branch gas pipe **(16)** branched off from the low pressure gas pipe **(15).** The branch gas pipe **(16)** is provided with a check valve **(7)** and an oil separator **(55).** An oil return pipe **(57)** having a capillary tube is connected between the oil separator **(55)** and the connecting gas pipe **(54).**

A bypass pipe **(59)** is connected between the connecting gas pipe **(54)** which is the suction side of the booster compressor **(53)** and the downstream side of the check valve **(7)** of the branch gas pipe **(16)** which is the discharge side of the booster compressor **(53).** The bypass pipe **(59)** is configured so that, when the booster compressor **(53)** is at shutdown (for example when the booster compressor **(53)** becomes out of order), refrigerant flow bypasses the booster compressor **(53).**

The supercooling heat exchanger **(210)** is made up of a so-called plate heat exchanger. A plurality of first flow paths **(211)** and a plurality of second flow paths **(212)** are formed within the supercooling heat exchanger **(210).** A third interconnecting liquid pipe **(18)** branches off from the first interconnecting liquid pipe **(11).** The first flow path **(211)** of the supercooling heat exchanger **(210)** forms a part of the first interconnecting liquid pipe **(11),** while the second flow path **(212)** forms a part of the third interconnecting liquid pipe **(18).**

A supercooling expansion valve **(223)** is provided between the branch point at which the third interconnecting liquid pipe **(18)** branches off from the third interconnecting liquid pipe **(18)** and the second flow path **(212).** The supercooling expansion valve **(223)** is made up of a temperature sensitive expansion valve and its temperature sensing tube is provided on the opposite side of the second flow path **(212).**

The supercooling heat exchanger **(210)** is employed to effect heat exchange between refrigerant flowing through the first flow path **(211)** and refrigerant of the refrigerating apparatus **(10)** flowing through the second flow path **(212),** when the supercooling expansion valve **(223)** is placed in the open state. The refrigerant, cooled as a result of passage through the first flow path **(211),** is passed through the first interconnecting liquid pipe **(11)** and then flows through the cold storage and freeze storage heat exchangers **(45, 51).**

### CONTROL SYSTEM

The refrigerant circuit **(1E)** is provided with various sensors and various switches. A high pressure sensor **(61)** for detecting the pressure of high pressure refrigerant is provided in the vicinity of the third port of the discharge side three way switching valve **(101)** of the outdoor unit **(1A).** The inverter compressor **(2)** is provided with a discharge temperature sensor **(62)** for detecting the temperature of high pressure refrigerant.

Low pressure sensors **(65, 66)** for detecting the pressure of low pressure refrigerant and a suction temperature sensor **(67)** for detecting the temperature of low pressure refrigerant are provided in the vicinity of the suction pipe **(6)** of the inverter compressor **(2).**

Additionally, the outdoor unit **(1A)** is provided with an outside air temperature sensor **(70)** for detecting the temperature of outside air.

The indoor heat exchanger **(41)** is provided with an indoor heat exchange sensor **(71)** for detecting the temperature of condensation or evaporation, i.e. the temperature of refrigerant, in the indoor heat exchanger **(41),** and a gas temperature sensor **(72)** for detecting the temperature of gas refrigerant is provided on the gas side thereof. In addition, the indoor unit **(1B)** is provided with a room temperature sensor **(73)** for detecting the temperature of room air.

The cold storage unit **(1C)** is provided with a cold storage temperature sensor **(74)** for detecting the compartment temperature of a cold storage showcase. The freeze storage unit **(1D)** is provided with a freeze storage temperature sensor **(75)** for detecting the compartment temperature of a freeze storage showcase.

Output signals from the various sensors and switches are fed to a controller **(80)** (shown only in Figure **1**). The controller **(80)** is configured, such that it controls the volume of the inverter compressor **(2),** and so on.

In addition, the controller **(80)** is configured, such that it controls the operation of the refrigerant circuit **(1E)** to selectively switch to a cooling operating mode, a refrigeration operating mode, a cooling/refrigeration operating mode, a heating operating mode, a first heating/refrigeration operating mode, a second heating/refrigeration operating mode, or a third heating/refrigeration operating mode.

By control by the controller **(80),** the second port of the discharge side three way switching valve **(101)** is fully closed when the outdoor heat exchanger **(4)** becomes an evaporator, as a result of which all of the refrigerant is forced to flow towards the third port of the discharge side three way switching valve **(101).** On the other hand, when the indoor heat exchanger **(41)** becomes a condenser during the heating operating mode and at thermo off, the third port is fully closed, as a result of which all of the refrigerant is forced to flow towards the second port. In addition, during the heat recovery operating mode wherein the indoor heat exchanger **(41)** and the outdoor heat exchanger **(4)** each operate as a condenser, it is controlled such that the second port is placed in the open state so that the discharge pressure falls below a certain level, when the high pressure sensor **(61)** detects that the discharge pressure of the inverter compressor **(2)** exceeds a certain level.

By control by the controller **(80),** the third port of the suction side three way switching valve **(102)** is constantly placed in the closed state when only the indoor unit **(1B)** is operated.

### RUNNING OPERATION

In the following, main running operations that the refrigerating apparatus **(1)** performs will now be described.

### COOLING MODE

The cooling mode selectively switches to any one of the cooling operating mode, the refrigeration operating mode, and the cooling/refrigeration operating mode.

### COOLING OPERATING MODE

As illustrated in Figure **2,** this cooling operating mode is an operating mode which provides only cooling by the indoor unit **(1B).**

The four way switching valve **(3A),** as indicated by solid line of Figure **2,** changes state to the OFF state. The electromagnetic valve **(7a)** of the cold storage unit **(1C)** and the electromagnetic valve **(7b)** of the freeze storage unit **(1D)** are placed in the closed state.

In this state, refrigerant expelled out of the inverter compressor **(2)** is passed through the second port of the discharge side three way switching valve **(101)** and is then distributed towards the outdoor gas pipe **(9).** Subsequently, the refrigerant condenses in the outdoor heat exchanger **(4).** This liquid refrigerant resulting from condensation flows through the first liquid pipe **(10a),** enters the receiver **(14),** passes through the connecting liquid pipe **(19)** and then through the second interconnecting liquid pipe **(12),** flows into the indoor heat exchanger **(41)** by way of the indoor expansion valve **(42),** and is evaporated in the indoor heat exchanger **(41).** The gas refrigerant resulting from evaporation flows through the interconnecting gas pipe **(17)** and then through the four way switching valve **(3A),** passes through the second port of the suction side three way switching valve **(102),** and returns into the inverter compressor **(2).** This circulation is repeatedly performed to thereby effect room air cooling, i.e. cooling of the inside of the store.

The degree of opening of the indoor expansion valve **(42)** is superheating degree controlled based on the temperature detected by the indoor heat exchange sensor **(71)** and the gas temperature sensor **(72),** which is applied in the same way in the following cooling modes.

### REFRIGERATION OPERATING MODE

This refrigeration operating mode is an operating mode which provides only refrigeration by the cold storage unit **(1C)** and refrigeration by the freeze storage unit **(1D).**

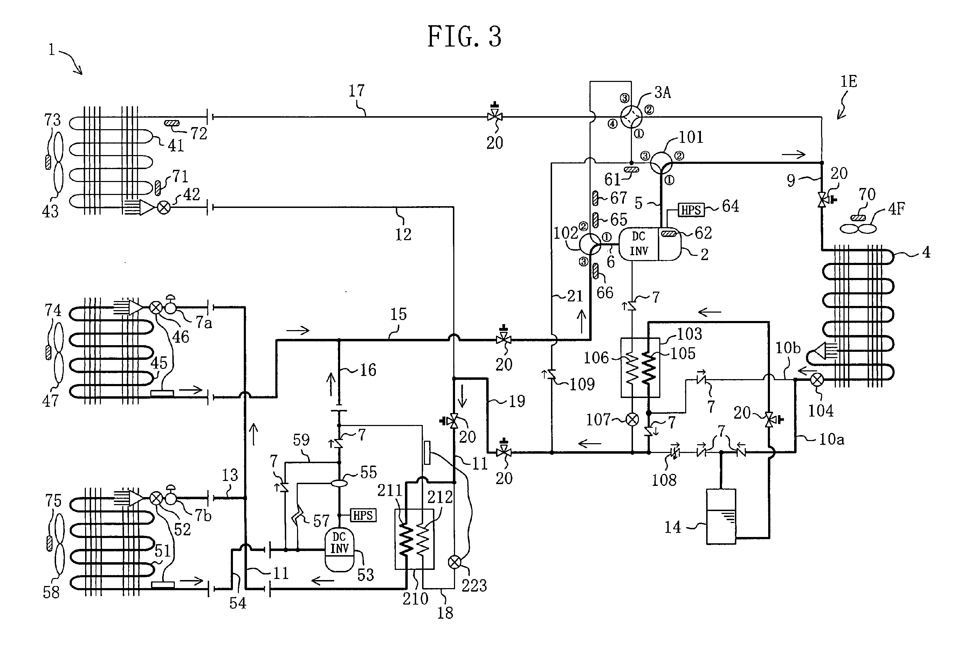

The four way switching valve **(3A),** as indicated by solid line of Figure **3,** changes state to the OFF state. In addition, the electromagnetic valve **(7a)** of the cold storage unit **(1C)** and the electromagnetic valve **(7b)** of the freeze storage unit **(1D)** are placed in the open state, while the indoor expansion valve **(42)** is placed in the closed state.

In this state, refrigerant expelled out of the inverter compressor **(2)** is passed through the second port of the discharge side three way switching valve **(101)** and is distributed towards the outdoor gas pipe **(9).** Subsequently, the refrigerant condenses in the outdoor heat exchanger **(4).** This liquid refrigerant resulting from condensation flows through the first liquid pipe **(10a),** enters the receiver **(14),** and passes through the connecting liquid pipe **(19)** and then through the first interconnecting liquid pipe **(11),** and one part of the refrigerant flows into the cold storage heat exchanger **(45)** by way of the cold storage expansion valve **(46)** and is evaporated in the cold storage heat exchanger **(45).**

On the other hand, the other part of the liquid refrigerant flowing through the first interconnecting liquid pipe **(11)** flows through the branch liquid pipe **(13),** flows into the freeze storage heat exchanger **(51)** by way of the freeze storage expansion valve **(52),** and is evaporated in the freeze storage heat exchanger **(51).** This gas refrigerant resulting from evaporation in the freeze storage heat exchanger **(51)** is drawn into the booster compressor **(53),** is compressed there, and is then discharged to the branch gas pipe **(16).**

The gas refrigerant resulting from evaporation in the cold storage heat exchanger **(45)** and the gas refrigerant expelled out of the booster compressor **(53)** join together in the low pressure gas pipe **(15),** and the merged refrigerant returns, via the third port of the suction side three way switching valve **(102),** into the inverter compressor **(2).** This circulation is repeatedly performed to thereby effect storage compartment refrigeration, i.e. refrigeration of the cold storage showcase and refrigeration of the freeze storage showcase.

The refrigerant in the freeze storage heat exchanger **(51)** is drawn into the booster compressor **(53),** therefore being lower in pressure than the refrigerant in the cold storage heat exchanger **(45).** As a result of this, for example, the refrigerant temperature (evaporating temperature) in the freeze storage heat exchanger **(51)** becomes minus 40 degrees Centigrade, while the refrigerant temperature (evaporating temperature) in the cold storage heat exchanger **(45)** becomes minus 10 degrees Centigrade.

In addition, the degree of opening of the cold storage expansion valve **(46)** and the degree of opening of the freeze storage expansion valves **(52)** are superheating degree controlled by the temperature sensing tubes, which is the same in each of the following operating modes.

### COOLING/REFRIGERATION OPERATING MODE

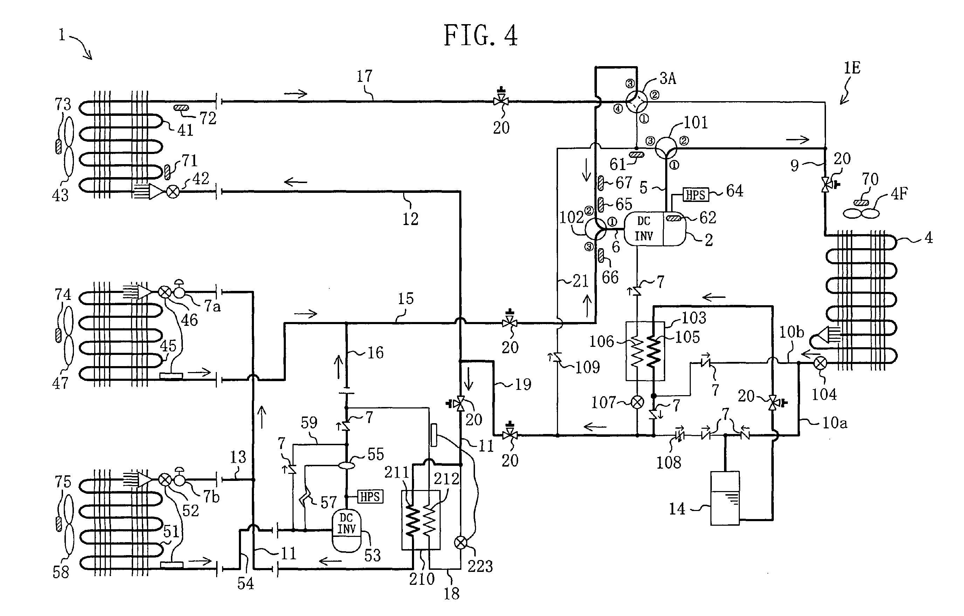

As illustrated in Figure **4,** this cooling/refrigeration operating mode is an operating mode which provides cooling by the indoor unit **(1B),** refrigeration by the cold storage unit **(1C),** and refrigeration by the freeze storage unit **(1D)** at the same time.

In addition, as indicated by solid line of Figure **4,** the four way switching valve **(3A)** changes state to the OFF state. Furthermore, the indoor expansion valve **(42),** the electromagnetic valve **(7a)** of the cold storage unit **(1C),** and the electromagnetic valve **(7b)** of the freeze storage unit **(1D)** are all placed in the open state.

In this state, refrigerant expelled out of the inverter compressor **(2)** is passed through the second port of the discharge side three way switching valve **(101)** and distributed towards the outdoor gas pipe **(9).** Subsequently, the refrigerant condenses in the outdoor heat exchanger **(4).** This liquid refrigerant resulting from condensation flows through the first liquid pipe **(10a),** enters the receiver **(14),** and passes through the connecting liquid pipe **(19),** and its flow branches off into the first interconnecting liquid pipe **(11)** and the second interconnecting liquid pipe **(12).**

The liquid refrigerant flowing through the second interconnecting liquid pipe **(12)** flows into the indoor heat exchanger **(41)** by way of the indoor expansion valve **(42)** and is evaporated in the indoor heat exchanger **(41).** This gas refrigerant resulting from evaporation is reduced in pressure when passing through the second port of the suction side three way switching valve **(102)** via the four way switching valve **(3A)** from the interconnecting gas pipe **(17),** and returns into the inverter compressor **(2).**

On the other hand, one part of the liquid refrigerant flowing through the first interconnecting liquid pipe **(11)** flows into the cold storage heat exchanger **(45)** by way of the cold storage expansion valve **(46)** and is evaporated in the cold storage heat exchanger **(45),** and the other part of the liquid refrigerant flowing through the first interconnecting liquid pipe **(11)** flows through the branch liquid pipe **(13),** flows into the freeze storage heat exchanger **(51)** by way of the freeze storage expansion valve **(52),** and is evaporated in the freeze storage heat exchanger **(51).** This gas refrigerant resulting from evaporation in the freeze storage heat exchanger **(51)** is drawn into the booster compressor **(53),** compressed there, and expelled to the branch gas pipe **(16).**

The gas refrigerant as a result of evaporation in the cold storage heat exchanger **(45)** and the gas refrigerant expelled out of the booster compressor **(53)** join together in the low pressure gas pipe **(15),** and the merged refrigerant returns, via the third port of the suction side three way switching valve **(102),** into the inverter compressor **(2).**

This circulation is repeatedly performed to thereby effect room air cooling, i.e. cooling of the inside of the store, simultaneously with storage compartment refrigeration, i.e. refrigeration of the cold storage showcase and refrigeration of the freeze storage showcase.

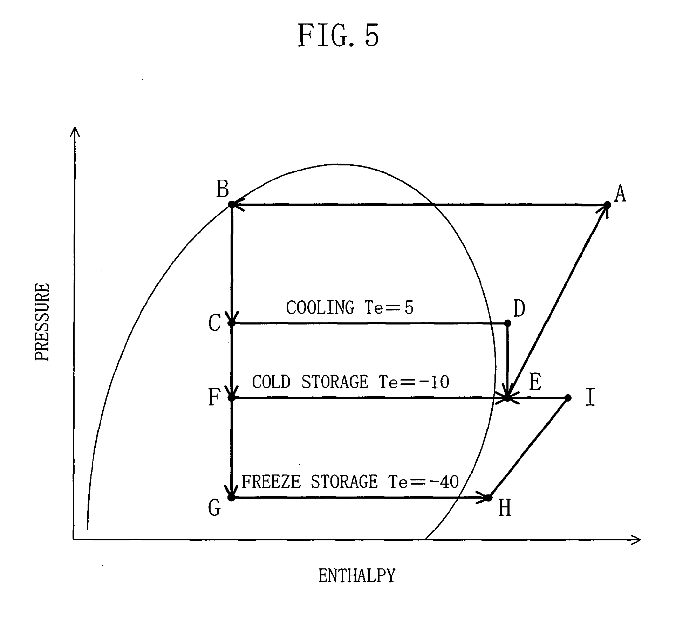

Here, by making reference to Figure **5,** the behavior of refrigerant during the cooling/refrigeration operating mode is described. However, for the sake of simplification, the description of the action of supercooling in the economizer and supercooling heat exchangers **(103, 210)** is omitted.

In the first place, refrigerant is compressed up to Point A by the inverter compressor **(2).** The refrigerant at Point A condenses to become a refrigerant at Point B. One part of the refrigerant at Point B is reduced in pressure down to Point C by the indoor expansion valve **(42),** evaporates at, for example, plus 5 degrees Centigrade, is reduced in pressure down to Point E when passing through the second port of the suction side three way switching valve **(102)** at Point D, and is then drawn into the inverter compressor **(2).**

In addition, one part of the refrigerant at Point B is reduced in pressure down to Point F by the cold storage expansion valve **(46),** evaporates at, for example, minus 10 degrees Centigrade, and is then drawn into the inverter compressor **(2)** at Point E.

Additionally, one part of the refrigerant at Point B is reduced in pressure down to Point G by the freeze storage expansion valve **(52)** because it is drawn into the booster compressor **(53),** evaporates at, for example, minus 40 degrees Centigrade, and is then drawn into the booster compressor **(53)** at Point H. The refrigerant compressed to Point I by the booster compressor **(53)** is drawn into the inverter compressor **(2)** at Point E.

As described above, the refrigerant in the refrigerant circuit (1E) evaporates at different temperatures by the suction side three way switching valve **(102).** Besides, by two-stage compression by the booster compressor **(53),** there are created three different evaporation temperatures.

### HEATING MODE

The heating mode is selectively switched, by control exercised by the controller **(80),** to either one of the heating operating mode, the first heating/refrigeration operating mode, the second heating/refrigeration operating mode, and the third heating/refrigeration operating mode.

### HEATING OPERATING MODE

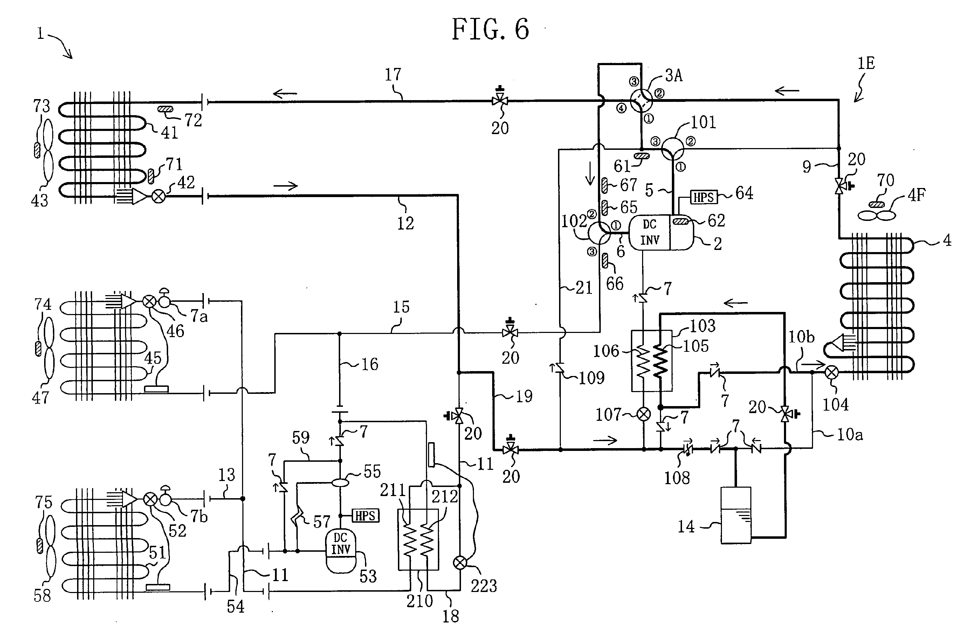

This heating operating mode is an operating mode which provides only heating by the indoor unit **(1B).** The four way switching valve **(3A)** changes state to the ON state, as indicated by solid line of Figure **6.** The second port of the discharge side three way switching valve **(101)** is placed in the closed state. The third port of the suction side three way switching valve **(102)** is placed in the closed state. In addition, the electromagnetic valve **(7a)** of the cold storage unit **(1C)** and the electromagnetic valve **(7b)** of the freeze storage unit **(1D)** are placed in the closed state.

In this state, refrigerant expelled out of the inverter compressor **(2)** passes through the third port of the discharge side three way switching valve **(101),** then through the four way switching valve **(3A),** and then through the interconnecting gas pipe **(17)** and flows into the indoor heat exchanger **(41)** where the refrigerant condenses. This liquid refrigerant resulting from condensation flows through the second interconnecting liquid pipe **(12)** and enters the receiver **(14).** Subsequently, the liquid refrigerant flows into the outdoor heat exchanger **(4)** by way of the heating electronic expansion valve **(104)** and is evaporated in the outdoor heat exchanger **(4).** The gas refrigerant resulting from evaporation passes through the outdoor gas pipe **(9),** then through the four way switching valve **(3A),** and then through the suction side three way switching valve **(102)** and returns into the inverter compressor **(2).** This circulation is repeatedly performed to thereby effect room air heating, i.e. heating of the inside of the store.

The degree of opening of the heating electronic expansion valve **(104)** is superheating degree controlled depending on the pressure corresponding saturation temperature based on the low pressure sensors **(65, 66)** and on the temperature detected by the suction temperature sensor **(67).** The degree of opening of the indoor expansion valve **(42)** is supercooling degree controlled based on the temperature detected by the indoor heat exchange sensor **(71).** The controlling of the degree of opening of the heating electronic expansion valve **(104)** and the controlling of the degree of opening of the indoor expansion valve **(42)** are the same in the following heating modes.

### FIRST HEATING/REFRIGERATION OPERATING MODE

This first heating/refrigeration operating mode is an operating mode which provides heating by the indoor unit **(1B),** refrigeration by the cold storage unit **(1C),** and refrigeration by the freeze storage unit **(1D),** without using the outdoor heat exchanger **(4).**

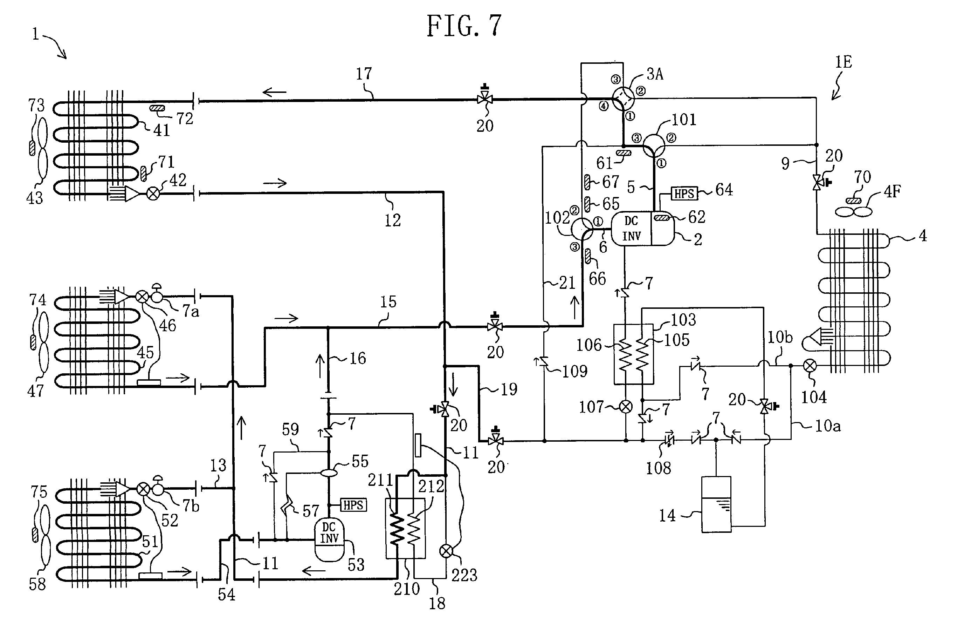

The four way switching valve **(3A)** changes state to the ON state, as indicated by solid line of Figure **7.** The second port of the discharge side three way switching valve **(101)** is placed in the closed state, while the third port of the suction side three way switching valve **(102)** is placed in the open state. Furthermore, the electromagnetic valve **(7a)** of the cold storage unit **(1C)** and the electromagnetic valve **(7b)** of the freeze storage unit **(1D)** are placed in the open state, while on the other hand the heating electronic expansion valve **(104)** is placed in the closed state.

In this state, all of the refrigerant expelled out of the inverter compressor **(2)** is fed towards the third port of the discharge side three way switching valve **(101).** This refrigerant passes through the four way switching valve **(3A)** and then through the interconnecting gas pipe **(17)** and flows into the indoor heat exchanger **(41)** where the refrigerant condenses. The liquid refrigerant resulting from condensation flows through the second interconnecting liquid pipe **(12)** and then through the first interconnecting liquid pipe **(11).**

One part of the liquid refrigerant flowing through the first interconnecting liquid pipe **(11)** flows into the cold storage heat exchanger **(45)** by way of the cold storage expansion valve **(46)** and is evaporated in the cold storage heat exchanger **(45).** On the other hand, the other part of the liquid refrigerant flowing through the first interconnecting liquid pipe **(11)** flows through the branch liquid pipe **(13)** into the freeze storage heat exchanger **(51)** by way of the freeze storage expansion valve **(52)** and is evaporated in the freeze storage heat exchanger **(51).** This gas refrigerant resulting from evaporation in the freeze storage heat exchanger **(51)** is drawn into the booster compressor **(53),** compressed there, and is then expelled to the branch gas pipe **(16).**

The gas refrigerant resulting from evaporation in the cold storage heat exchanger **(45)** and the gas refrigerant expelled out of the booster compressor **(53)** join together in the low pressure gas pipe **(15),** and the merged refrigerant returns into the inverter compressor **(2).** This circulation is repeatedly performed to thereby effect room air heating, i.e. heating of the inside of the store, simultaneously with storage compartment refrigeration, i.e. refrigeration of the cold storage showcase and refrigeration of the freeze storage showcase. In other words, the refrigeration capability of the cold storage and freeze storage units **(1C, 1D),** i.e. the amount of evaporation heat, is in balance with the heating capability of the indoor unit **(1B),** i.e. the amount of condensation heat, whereby 100% heat recovery is achieved.

### SECOND HEATING/REFRIGERATION OPERATING MODE

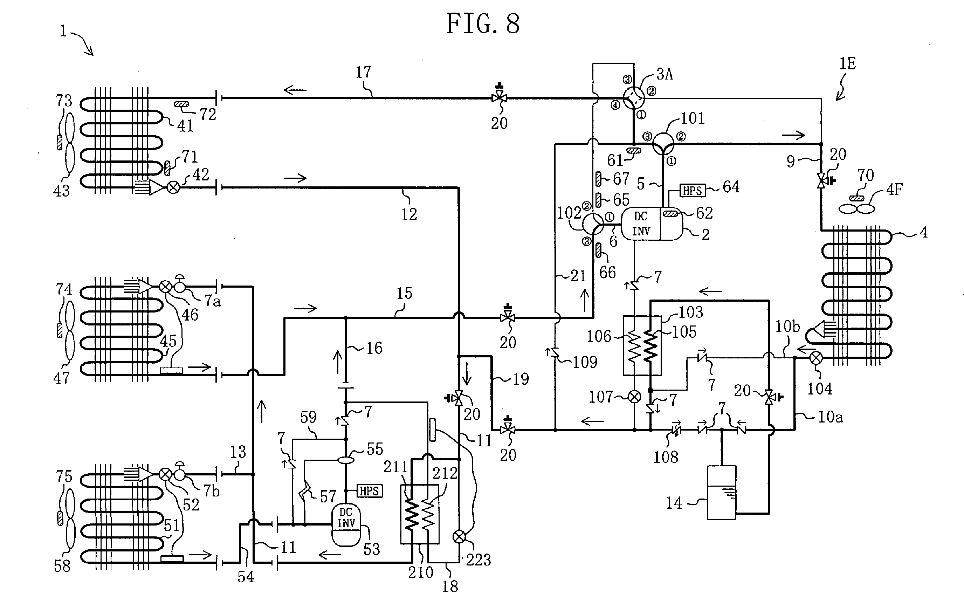

As illustrated in Figure **8,** this second heating/refrigeration operating mode is a heating capability excess operating mode in which the heating capability of the indoor unit **(1B)** becomes surplus during the first heating/refrigeration operating mode.

The second heating/refrigeration operating mode is a heat recovery operating mode when the heating capability of the indoor unit **(1B)** becomes surplus in the first heating/refrigeration operating mode.

Upon detection by the high pressure sensor **(61)** that the discharge pressure of the inverter compressor **(2)** exceeds a certain level, the controller **(80)** controls the second port to open, and refrigerant expelled out of the inverter compressor **(2)** is distributed by the discharge side three way switching valve **(101).** Stated another way, only refrigerant of a flow rate capable of giving condensation heat necessary in the indoor heat exchanger **(41)** is passed through the third port to the indoor heat exchanger **(41)** where the refrigerant is condensed. The liquid refrigerant resulting from condensation flows through the second interconnecting liquid pipe **(12)** and then through the first interconnecting liquid pipe **(11).**

On the other hand, the rest of the refrigerant expelled out of the inverter compressor **(2)** passes through the second port of the discharge side three way switching valve **(101)** and is then distributed towards the outdoor gas pipe **(9).** Subsequently, the refrigerant condenses in the outdoor heat exchanger **(4).** This liquid refrigerant resulting from condensation flows through the first liquid pipe **(10a),** enters the receiver **(14),** passes through the connecting liquid pipe **(19),** and joins the refrigerant which has passed through the indoor heat exchanger **(41)** in the first interconnecting liquid pipe **(11).**

Thereafter, one part of the refrigerant flowing through the first interconnecting liquid pipe **(11)** flows into the cold storage heat exchanger **(45)** where the one part refrigerant is evaporated. On the other hand, the other part of the refrigerant flowing through the first interconnecting liquid pipe **(11)** flows into the freeze storage heat exchanger **(51)** where the other part refrigerant is evaporated. The gas refrigerant resulting from evaporation in the cold storage heat exchanger **(45)** and the gas refrigerant expelled out of the booster compressor **(53)** after evaporation in the freeze storage heat exchanger **(51)** join together in the low pressure gas pipe **(15),** and the merged gas refrigerant passes through the third port of the suction side three way switching valve **(102)** and returns into the inverter compressor **(2).** This circulation is repeatedly performed to thereby effect room air heating, i.e. heating of the inside of the store, simultaneously with storage compartment refrigeration, i.e. refrigeration of the cold storage showcase and refrigeration of the freeze storage showcase. In other words, the refrigeration capability of the cold storage and freeze storage units **(1C, 1D),** i.e. the amount of evaporation heat, is out of balance with the heating capability of the indoor unit **(1B),** i.e. the amount of condensation heat, and only surplus condensation heat is released outdoors in the outdoor heat exchanger **(4).**

### THIRD HEATING/REFRIGERATION OPERATING MODE

This third heating/refrigeration operating mode is a heating capability deficiency operating mode in which the heating capability of the indoor unit **(1B)** becomes deficient in the first heating/refrigeration operating mode. In other words, this is an operating mode which is deficient in the amount of evaporation heat.

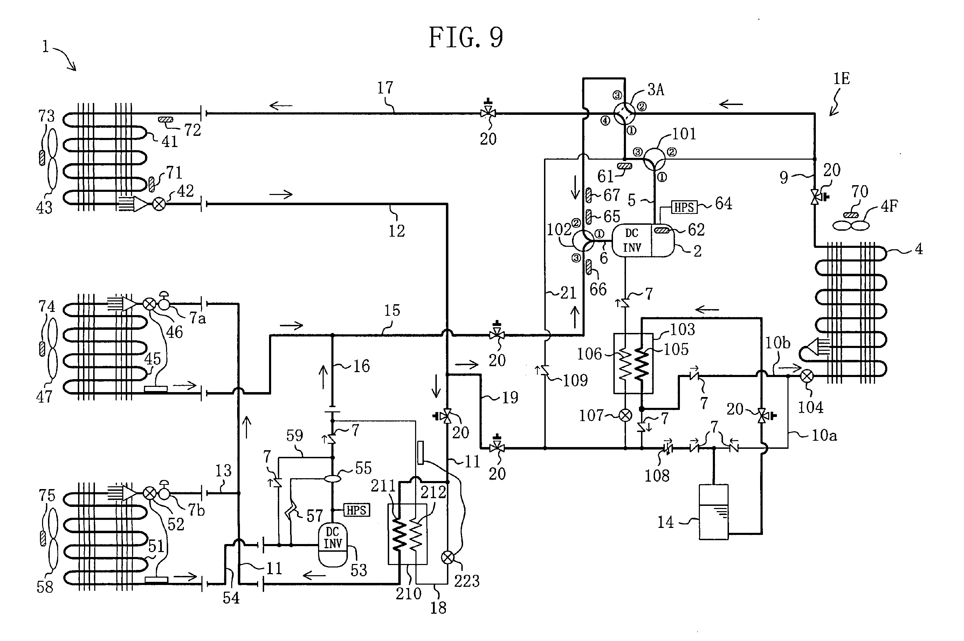

The four way switching valve **(3A)** changes state to the ON state, as indicated by solid line of Figure **9.** The second port of the discharge side three way switching valve **(101)** is placed in the closed state, while the second and third ports of the suction side three way switching valve **(102)** are placed in the open state. Furthermore, the indoor expansion valve **(42),** the electromagnetic valve **(7a)** of the cold storage unit **(1C),** and the electromagnetic valve **(7b)** of the freeze storage unit **(1D)** are all placed in the open state.

Accordingly, as in the first heating/refrigeration operating mode, all of refrigerant expelled out of the inverter compressor **(2)** flows into the indoor heat exchanger **(41)** where the refrigerant is condensed. The liquid refrigerant resulting from condensation passes through the second interconnecting liquid pipe **(12)** and flows into the first interconnecting liquid pipe **(11)** and into the receiver **(14).**

Thereafter, one part of the refrigerant flowing through the first interconnecting liquid pipe **(11)** flows into the cold storage heat exchanger **(45)** where the one part refrigerant is evaporated. On the other hand, the other part of the refrigerant flowing through the first interconnecting liquid pipe **(11)** flows into the freeze storage heat exchanger **(51)** where the other part refrigerant is evaporated. The gas refrigerant resulting from evaporation in the cold storage heat exchanger **(45)** and the gas refrigerant expelled out of the booster compressor **(53)** after evaporation in the freeze storage heat exchanger **(51)** join together in the low pressure gas pipe **(15),** and the merged gas refrigerant is reduced in pressure when passing through the third port of the suction side three way switching valve **(102)** and returns into the inverter compressor **(2).**

On the other hand, the other liquid refrigerant which has flowed into the side of the receiver **(14)** passes through the second liquid pipe **(10b)** and then through the heating electronic expansion valve **(104),** flows into the outdoor heat exchanger **(4),** and is evaporated there. The gas refrigerant resulting from evaporation flows through the outdoor gas pipe **(9),** passes through the four way switching valve **(3A)** and then through the suction side three way switching valve **(102),** and returns into the inverter compressor **(2).**

This circulation is repeatedly performed to thereby effect room air heating, i.e. heating of the inside of the store, simultaneously with storage compartment refrigeration, i.e. refrigeration of the cold storage showcase and refrigeration of the freeze storage showcase. In other words, the refrigeration capability of the cold storage and freeze storage units **(1C, 1D),** i.e., the amount of evaporation heat, is out of balance with the heating capability of the indoor unit **(1B)**, i.e. the amount of condensation heat, and the amount of evaporation heat which is lacking is derived from the outdoor heat exchanger **(4).**

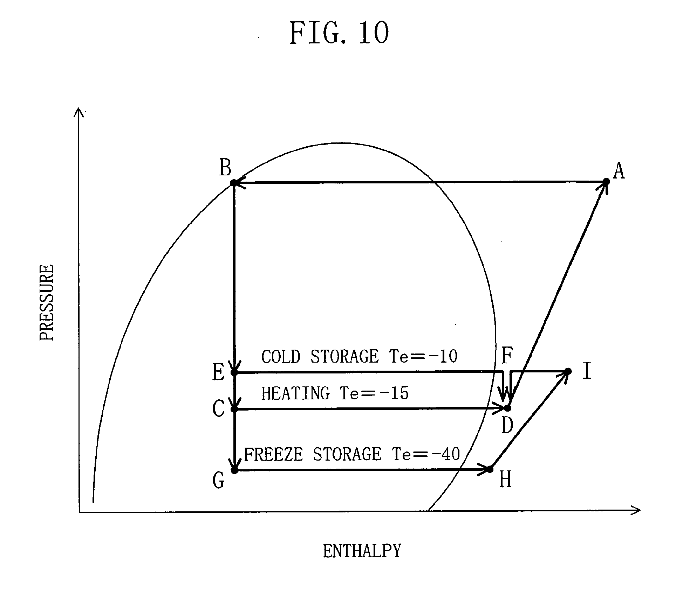

The behavior of refrigerant in the third heating/refrigeration operating mode is therefore described with reference to Figure **10.** However, for the sake of simplification, the description of the action of supercooling in the economizer and supercooling heat exchangers **(103, 210)** is omitted.

In the first place, refrigerant is compressed up to Point A by the inverter compressor **(2).** The refrigerant at Point A is condensed to become a refrigerant at Point B. This refrigerant at Point B is reduced in pressure down to Point C by the heating electronic expansion valve **(104),** is evaporated at, for example, minus 15 degrees Centigrade, and is drawn into the inverter compressor **(2)** at Point D.

In addition, one part of the refrigerant at Point B is reduced in pressure down to Point E by the cold storage expansion valve **(46),** is evaporated at, for example, minus 10 degrees Centigrade, is reduced in pressure down to Point D when passing through the third port of the suction side three way switching valve **(102)** at Point F, and is drawn into the inverter compressor **(2).**

In addition, one part of the refrigerant at Point B, since it is drawn into the booster compressor **(53),** is reduced in pressure down to Point G by the freeze storage expansion valve **(52),** is evaporated at, for example, minus 40 degrees Centigrade, and is drawn into the booster compressor **(53)** at Point H. The refrigerant compressed up to Point I by the booster compressor **(53)** is reduced in pressure down to Point D when passing through the third port of the suction side three way switching valve **(102)** at Point F, and is drawn into the inverter compressor **(2).**

As described above, the refrigerant in the refrigerant circuit **(1E)** evaporates at different temperatures by the suction side three way switching valve **(102).** Besides, by two-stage compression by the booster compressor **(53),** there are created three different evaporation temperatures.

### CAPABILITY REGULATING TECHNIQUES

In the following, how the capability to provide air conditioning (the capability to provide cooling or heating) and the capability to provide cold storage/freeze storage are regulated in each of the operating modes is described.

The controller **(80)** controls the inverter compressor **(2)** or the suction side three way switching valve **(102)** to thereby regulate the refrigerant flow rate of each of the heat exchangers **(41, 45, 51)** for regulation of the capability to provide air conditioning and for regulation of the capability to provide refrigeration. More specifically, the controller **(80)** controls the inverter compressor **(2)** or the suction side three way switching valve **(102)** based on the pressure difference between the refrigerant low pressure (evaporating pressure) and its target pressure (hereinafter referred to just as the "refrigerant pressure difference"). The refrigerant pressure difference on the air conditioning side is the difference between the pressure detected by the low pressure sensor **(65)** and its target pressure, while the refrigerant pressure difference on the refrigeration side is the difference between the pressure detected by the low pressure sensor **(66)** and its target pressure.

For example, when in the cooling/refrigeration operating mode the load increases and, as a result, both the refrigerant pressure difference on the air conditioning side and the refrigerant pressure difference on the refrigeration side increase, the controller (80) controls the operating volume of the inverter compressor **(2)** to increase. In other words, the flow volume distribution ratio of the second and third ports of the suction side three way switching valve **(102)** remains unchanged, but the flow rate of refrigerant flowing through each port increases. As a result of this, the flow rate of refrigerant of each of the indoor heat exchanger **(41),** the cold storage heat exchanger **(45),** and the freeze storage heat exchanger **(51)** increases, and both the capability to provide cooling and the capability to provide cold storage/freeze storage are enhanced. As the load increases, the low pressure of refrigerant becomes higher than the target pressure. When either one of the load on the air conditioning side and the load on the refrigeration side increases, the controller **(80)** controls the operating volume of the inverter compressor **(2)** to increase and changes the flow rate distribution ratio of the suction side three way switching valve **(102).** In other words, the total flow volume of refrigerant of the suction side three way switching valve **(102)** is increased and, in addition, in order that the amount thus increased may flow through ports on the side that has undergone an increase in load, the flow volume distribution ratio of the suction side three way switching valve **(102)** is changed.

On the contrary, when the inverter compressor **(2)** is being operated at its maximum volume, the controller **(80)** gives preference to one side with a greater refrigerant pressure difference than the other side and controls the suction side three way switching valve **(102)** so that the refrigerant flow volume of the one side is increased preferentially. For example, if the air conditioning side has a greater refrigerant pressure difference than the registration side, the flow volume distribution ratio between each port is changed so that in the suction side three way switching valve **(102)** the refrigerant flow rate of the second port increases and the flow rate of refrigerant of the third port is decreased by that much. To sum up, the total flow volume of refrigerant flowing through the suction side three way switching valve **(102)** remains unchanged. As a result of this, the refrigerant flow rate of the indoor heat exchanger **(41)** increases and, as a result, the capability to provide cooling is enhanced, while the refrigerant flow rate of each of the cold storage heat exchanger **(45)** and the freeze storage heat exchanger **(51)** decreases and, as a result, the capability to provide cold storage/freeze storage drops. Therefore, it becomes possible for these capabilities to substantially balance with each other, thereby making it possible to suppress considerable capability deficiency.

The controller **(80)** performs the same control operations in the third heating/refrigeration operating mode as well. In addition, when the load increases in the operating modes (i.e. cooling, refrigeration, heating, first heating/refrigeration, and second heating/refrigeration), the controller **(80)** controls the operating volume of the inverter compressor **(2)** to increase.

### EFFECTS OF THE EMBODIMENT

As described above, in accordance with the refrigerating apparatus **(1)** of the embodiment, while the evaporating temperature of the indoor heat exchanger **(41)** is kept higher than the evaporating temperature of the cold storage and freeze storage heat exchangers **(45, 51),** switching of the flow paths is accomplished by the suction side three way switching valve **(102).** This allows the refrigerating apparatus to efficiently switch from one operating mode to another, without having to create an evaporating pressure difference by a plurality of compressors and without the need for separate provision of a pressure regulating valve.

### VARIATIONS OF THE EMBODIMENT

In each variation of the embodiment, the controller **(80)** controls, based on parameters other than the low pressure of refrigerant, the inverter compressor **(2)** and the suction side three way switching valve **(102).**

In a first variation of the embodiment, the controller **(80)** controls the inverter compressor **(2)** et cetera based on the temperature difference between the temperature of suction air in each heat exchanger **(41, 45, 51)** and its target temperature (hereinafter referred to just as the "air temperature difference"). In other words, the air temperature difference on the air conditioning side is the difference between the temperature of air drawn in by the indoor fan **(43)** and its target temperature. On the other hand, the air temperature difference on the refrigeration side is either the difference between the temperature of air drawn in by the cold storage fan **(47)** and its target temperature or the difference between the temperature of air drawn in by the freeze storage fan **(58)** and its target temperature, whichever is greater.

In this case, for example, when in the cooling/refrigeration operating mode the load increases and, as a result, the air temperature difference increases both on the air conditioning side and on the refrigeration side, i.e., when the air temperature exceeds the target temperature, the operating volume of the inverter compressor **(2)** is increased. Here, when the inverter compressor **(2)** is being operated at its maximum volume, one side with a higher air temperature difference than the other side is given preference and the suction side three way switching valve **(102)** is controlled so that the refrigerant flow volume of the one side is increased preferentially.

In a second variation of the embodiment, the controller **(80)** controls the inverter compressor **(2)** et cetera based on the temperature difference between the evaporating temperature of refrigerant and its target temperature (hereinafter referred to just as the "refrigerant temperature difference"). In other words, the refrigerant temperature difference on the air conditioning side in the cooling operating mode means the difference between the temperature of refrigerant in the indoor heat exchanger **(41)** and its target temperature, while on the other hand the refrigerant temperature difference on the air conditioning side in the heating operating mode means the difference between the temperature of refrigerant in the outdoor heat exchanger **(4)** and its target temperature. On the other hand, the refrigerant temperature difference on the refrigeration side is either the difference between the temperature of refrigerant in the cold storage heat exchanger **(45)** and its target temperature or the difference between the temperature of refrigerant in the freeze storage heat exchanger **(51)** and its target temperature, whichever is greater.

In this case, for example, when in the cooling/refrigeration operating mode the load increases and, as a result, the refrigerant temperature difference increases both on the air conditioning side and on the refrigeration side, i.e., when the refrigerant evaporating temperature exceeds the target temperature, the operating volume of the inverter compressor **(2)** is increased. Here, when the inverter compressor **(2)** is being operated at its maximum volume, one side with a higher refrigerant temperature difference than the other side is given preference and the suction side three way switching valve **(102)** is controlled so that the refrigerant flow volume of the one side is increased preferentially.

In a third variation of the embodiment, the indoor heat exchanger **(41),** the cold storage heat exchanger **(45),** and the freeze storage heat exchanger **(51)** are each provided in a respective plural number. The indoor heat exchangers **(41),** the cold storage heat exchangers **(45),** and the freeze storage heat exchangers **(51)** are arranged in parallel respectively. And, the controller **(80)** controls the inverter compressor **(2)** et cetera based on the number of heat exchangers **(41, 45, 51)** in operation or based on the ratio of the number of heat exchangers **(41, 45, 51)** in operation. Basically, the controller **(80)** controls the inverter compressor **(2)** et cetera based on the number of heat exchangers in operation if the heat exchangers **(41, 45, 51)** are provided equally in number to each other, while if the heat exchangers **(41, 45, 51)** are provided differently in number from each other, the controller **(80)** controls the inverter compressor **(2)** et cetera based on the ratio of the number of heat exchangers in operation.

In this case, for example, when in the cooling/refrigeration operating mode the load increases and, as a result, the number of heat exchangers **(41, 45, 51)** in operation or the ratio of the number of heat exchangers **(41, 45, 51)** in operation increases, the operating volume of the inverter compressor **(2)** is increased. Here, when the inverter compressor **(2)** is being operated at its maximum volume, one side with a larger number of heat exchangers in operation or with a higher ratio of the number of heat exchangers in operation is given preference and the suction side three way switching valve **(102)** is controlled so that the refrigerant flow volume of the one side is increased preferentially.

In a fourth variation of the embodiment, the controller **(80)** controls the suction side three way switching valve **(102)** based on the above-mentioned refrigerant low pressure, when there is an increase in refrigerant high pressure, refrigerant condensing temperature or outside air temperature. Here, the refrigerant high pressure is a pressure detected by the high pressure sensor **(61).** The refrigerant condensing temperature in the cooling operating mode means the temperature of refrigerant in the outdoor heat exchanger **(4),** while on the other hand it means the temperature of refrigerant in the indoor heat exchanger **(41)** in the heating operating mode. The outside air temperature is a temperature detected by the outside air temperature sensor **(70).**

More specifically, when it is decided that the load has increased due to an increase in refrigerant high pressure, refrigerant condensing temperature, or outside air temperature, the controller **(80)** controls the operating volume of the inverter compressor **(2)** to increase. At this time, if the inverter compressor **(2)** is being operated at its maximum volume, the air conditioning side or the refrigeration side, whichever is lower in refrigerant low pressure, is given preference and the suction side three way switching valve **(102)** is controlled so that the refrigerant flow volume of the preferential side is increased. Alternatively, the controller **(80)** may control the suction side three way switching valve **(102)** so that the refrigerant flow volume of the air conditioning side or the refrigeration side, whichever is lower in (a) refrigerant low pressure's target pressure (instead of the refrigerant low pressure), (b) refrigerant evaporating temperature, or target temperature of the temperature of incoming air, is increased.

### OTHER EMBODIMENTS

In the above-described embodiment, the discharge side three way switching valve **(101)** is provided as a flow rate regulating means. However, the discharge side three way switching valve **(101)** may be a four way switching valve capable of flow rate regulation. Also in each case, the same operation/working effect as the above-described embodiment is obtained.

### INDUSTRIAL APPLICABILITY

As has been described above, the present invention is useful for refrigerating apparatuses installed in convenience stores, supermarkets et cetera and provided with air conditioning heat exchangers and refrigeration heat exchangers.

## Claims

1. A refrigerating apparatus comprising a refrigerant circuit **(1E),** the refrigerant circuit **(1E)** including a compressor **(2),** a heat source side heat exchanger **(4),** an expansion mechanism, a first heat exchanger **(41)** for room air conditioning, and a second heat exchanger **(45, 51)** for storage compartment refrigeration which are connected,
wherein:
the refrigerant circuit **(1E)** is provided with flow rate regulating means **(102)** for establishing switching of flow paths between the first heat exchanger **(41)** and the second heat exchanger **(45, 51),** and the compressor **(2)** in such a manner that the amount of refrigerant flow becomes variable, whereby the first heat exchanger **(41)** and the second heat exchanger **(45, 51)** differ from each other in refrigerant evaporating temperature.

2. A refrigerating apparatus comprising a refrigerant circuit **(1E),** the refrigerant circuit **(1E)** including a compressor **(2),** a heat source side heat exchanger **(4),** an expansion mechanism, a first heat exchanger **(41)** with a first evaporating temperature, and a second heat exchanger **(45, 51)** with a second evaporating temperature which are connected,
wherein:
the refrigerant circuit **(1E),** in which the first heat exchanger **(41)** and the second heat exchanger **(45, 51)** are connected in parallel, is provided, on a suction side of the compressor **(2),** with flow rate regulating means **(102)** for variably changing the amount of refrigerant flow from the first heat exchanger **(41)** and the second heat exchanger **(45, 51)** to the compressor **(2).**

3. The refrigerating apparatus of claim 1 or claim 2 wherein the flow rate regulating means is a switching valve **(102)** capable of flow rate regulation and connected to a suction pipe **(6)** of the compressor **(2)** and to the first heat exchanger **(41)** and the second heat exchanger **(45, 51)**.
